(19) Europäisches Patentamt
European Patent Office
Office européen des brevets

(11) **EP 2 107 005 A1**

(12) **DEMANDE DE BREVET EUROPEEN**

(43) Date de publication:
**07.10.2009 Bulletin 2009/41**

(51) Int Cl.:
*B64C 39/02* (2006.01)    *G05D 1/00* (2006.01)

(21) Numéro de dépôt: **09157000.2**

(22) Date de dépôt: **31.03.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(30) Priorité: **01.04.2008 FR 0801789**

(71) Demandeur: **Thales**
**92200 Neuilly-sur-Seine (FR)**

(72) Inventeur: **Soulignac, Michaël**
**33140, Villenave d'Ornon (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(54) **Planification de chemins en présence de courants forts**

(57) L'invention concerne un procédé de planification de chemins pour un mobile se déplaçant à une certaine vitesse dans des courants pouvant varier en vitesse et en direction. Le procédé comprend les étapes suivantes :
- discrétiser l'espace en zones (5) de courant élémentaire, chaque zone (5) étant délimitée par des bords ($6_j$),
- associer à chaque bord ($6_j$) un point de passage ($V_j$) possible pour le mobile, chaque point de passage ($V_j$)

pouvant translater sur son bord ($6_j$),
- déterminer une séquence de points de passage ($6_j$) permettant au mobile de relier le point de départ au point d'arrivée en un minimum de temps.

L'invention a notamment pour avantage qu'elle permet de trouver, même en présence de courants forts, un chemin optimal entre un point de départ et un point d'arrivée, dès lors qu'au moins un chemin physiquement réalisable existe.

FIG.2

**Description**

L'invention concerne un procédé de planification de chemins pour un mobile entre un point de départ et un point d'arrivée situés dans un espace donné en présence de courants, notamment en présence de courants forts, c'est-à-dire des courants dont la vitesse est supérieure à celle du mobile se déplaçant dans cet espace.

L'invention s'applique à la recherche de chemins possibles ou optimales pour des mobiles se déplaçant dans des conditions de courant non uniforme, les engins mobiles étant par exemple des avions sans pilote, également appelés drones, ou des robots autoguidés sous-marins. Pour les premiers, les courants impliqués sont des courants aériens alors que pour les seconds, il s'agit de courants marins. Dans les deux cas, les engins mobiles se déplacent généralement à des vitesses relativement faibles, ces vitesses pouvant être inférieures aux vitesses des courants du milieu dans lequel ils évoluent. Par conséquent, les courants doivent impérativement être pris en compte afin de fournir un chemin physiquement réalisable compte tenu de la vitesse de l'engin mobile.

Actuellement, les procédés de planification de chemins en présence de courants utilisent principalement des algorithmes génétiques et des algorithmes de propagation d'onde.

Les algorithmes génétiques miment le processus de sélection naturelle proposé par Darwin. Dans le présent contexte, les chemins jouent le rôle d'individu d'une population. Les meilleurs d'entre eux, c'est-à-dire ceux dont le temps de parcours est le plus court, sont sélectionnés pour survivre et se reproduire au cours des générations. Cependant, les algorithmes génétiques souffrent d'un problème majeur dit de convergence prématurée. Cela signifie que, de façon difficilement contrôlable, l'ensemble de la population peut s'appauvrir et converger vers un individu unique, appelé super-individu. Toutefois, ce super-individu peut être de piètre qualité, le chemin présentant par exemple de nombreux détours, ou même s'avérer physiquement irréalisable. De nombreuses solutions ont été proposées, telles le front de Pareto, la formation de sous-populations stables dans le voisinage des solutions optimales, appelée méthode des niches, et la méthode d'élitisme ; mais ces solutions ne font que limiter le problème sans le résoudre. Par ailleurs, les algorithmes génétiques nécessitent le réglage de nombreux paramètres, notamment la taille de la population, le nombre de générations, le type d'opérateurs et les probabilités associées. Ce réglage, généralement effectué de façon empirique, est fastidieux et ne fournit aucune garantie sur le comportement de l'algorithme.

Les algorithmes de propagation d'onde sont utilisés depuis longtemps pour la planification de chemins en l'absence de courants. Ils furent initialement introduits par Raymond JARVIS et sont notamment présentés dans JARVIS, R. Collision-Free Trajectory Planning Using Distance Transforms, Mechanical Engineering Transactions, Journal of Institution of Engineers, Vol. ME10, No. 3, 1985, p. 187-191. Selon ces algorithmes, l'espace est discrétisé en un nombre fini d'éléments appelés cellules. Chaque cellule comprend un point de passage possible pour le chemin. Le point de passage correspond généralement au centre de la cellule. Lors d'une première étape de l'algorithme de propagation, tous les points de passage des cellules adjacentes à la cellule contenant le point de départ sont évalués en termes de temps de parcours, également appelés coûts. Lors des étapes ultérieures, on considère le point de passage pour lequel le coût est minimal et on évalue le temps de parcours entre ce point de passage et les points de passage des cellules adjacentes non encore explorées, une cellule étant considérée comme explorée lorsqu'un coût lui a déjà été attribué. Le temps de parcours entre le point de départ et les points de passage des cellules adjacentes non explorées, autrement dit le coût de ces cellules, peut ainsi être déterminé par une simple addition. Dans le cas où plusieurs points de passage ont un coût égal, on considère successivement ces points de passage. A chaque étape, il est possible de distinguer les cellules explorées des cellules non explorées. La frontière entre les cellules explorées et les cellules non explorées forme un front d'onde à partir duquel les points de passage suivants peuvent être évalués. En d'autres termes, le front d'onde se propage progressivement dans les cellules, jusqu'à atteindre la cellule contenant le point d'arrivée. Le chemin optimal est ensuite construit en partant du point d'arrivée, en utilisant un algorithme couramment appelé "hill climbing" dans la littérature anglosaxonne. Cet algorithme est l'équivalent discret de la méthode du gradient et consiste à se déplacer de proche en proche au sein des cellules jusqu'à atteindre le point de départ, chaque déplacement étant déterminé afin de choisir la cellule de coût minimal dans le voisinage direct de la cellule courante.

La propagation d'onde a ensuite été adaptée pour pouvoir prendre en compte la présence de courants. Une première adaptation est proposée dans PETRES, C., Y. PAILHAS, J. EVANS, Y. PETILLOT et D. LANE. Underwater path planning using fast marching algorithms, Proceedings of Oceans 2005 - Europe, Vol. 2, Brest, France, juin 2005, p. 814-819. Une deuxième adaptation est décrite dans GARAU, B., A. ALVAREZ et G. OLIVER, Path planning of autonomous underwater vehicles in current fields with complex spatial variability: an A* approach, Proceedings of the IEEE Conference on Robotics and Automation (ICRA 2005), Barcelone, Espagne, avril 2005, p. 546-556. Une troisième adaptation est proposée dans SOULIGNAC, M. Planification de trajectoires pour engins volants autonomes, Rencontre Nationale des Jeunes Chercheurs en Intelligence Artificielle, p. 195-212. Ces adaptations donnent des résultats satisfaisants en présence de courants modérés, mais elles ne sont pas fiables en présence de courants forts. En particulier, les première et deuxième adaptations présentent des problèmes d'incorrection, l'incorrection étant définie comme la fourniture d'une solution physiquement irréalisable compte tenu de la vitesse du mobile et de celle du courant. La troisième adaptation a permis de corriger ce problème mais présente un problème d'incomplétude. L'incomplétude est définie comme l'échec de fourniture d'un chemin alors qu'au moins un chemin valide existe.

En résumé, aucun procédé de planification de chemins en présence de courants ne permet de trouver, à coup sûr lorsqu'il existe, un chemin à la fois optimal et physiquement réalisable. Dans le contexte de l'invention, on entend par chemin optimal, le chemin parcouru en un minimum de temps.

Un but de l'invention est notamment de pallier tout ou partie des inconvénients précités en proposant un procédé de planification de chemins en présence de courants exempte des problèmes d'incorrection et d'incomplétude. A cet effet, l'invention a pour objet un procédé de planification de chemins pour un mobile entre un point de départ et un point d'arrivé situés dans un espace donné en présence de courants, ces courants pouvant varier en vitesse et en direction dans l'espace, le mobile étant soumis aux courants et se déplaçant à une vitesse donnée par rapport aux courants. Selon l'invention, le procédé comprend les étapes suivantes :

- discrétiser l'espace en zones de courant élémentaire, chaque zone étant délimitée par des bords,
- associer à chaque bord un point de passage possible pour le mobile, chaque point de passage pouvant translater sur son bord,
- déterminer une séquence de points de passage permettant au mobile de relier le point de départ au point d'arrivée en un minimum de temps.

L'invention a notamment pour avantage qu'elle permet de trouver, même en présence de courants forts, un chemin optimal entre un point de départ et un point d'arrivée, dès lors qu'au moins un chemin physiquement réalisable existe.

Selon une forme particulière de réalisation, une zone de courant élémentaire est une zone de forme polygonale, indivisible et dans laquelle le courant est considéré comme homogène sur la totalité de la surface de la zone. Les zones de courant élémentaire peuvent être construites en calculant le diagramme de Voronoï autour de points pour lesquels on connaît une vitesse et une direction de courant.

Selon une forme particulière de réalisation, la détermination de la séquence de points de passage permettant au mobile de relier le point de départ au point d'arrivée en un minimum de temps utilise un algorithme de propagation d'onde adapté aux points de passage.

Selon une forme particulière de réalisation, un chemin comprend une succession de segments de droite entre le point de départ et le point d'arrivée, une fonction de coût $t^{j,j+1}$ étant associée à chaque segment de droite entre deux points de passage voisins et définie par la relation :

$$t^{j,j+1} = \frac{-\left(c_x^j.d_x^j + c_y^j.d_y^j\right) + \sqrt{\Delta}}{\left(v^j\right)^2 - \left(c^j\right)^2}, \quad \text{où} \quad \overrightarrow{d^j}\left(d_x^j; d_y^j\right)$$

représente le déplacement du mobile entre les points de passage voisins $V_j$ et $V_{j+1}$, $\overrightarrow{c^j}\left(c_x^j; c_y^j\right)$ représente le vecteur vitesse du courant dans la zone de courant élémentaire dans laquelle se déplace le mobile, $\overrightarrow{v^j}\left(v_x^j; v_y^j\right)$ représente le vecteur vitesse du mobile par rapport au courant dans cette même zone de courant élémentaire et où $\Delta = \left(v^j\right)^2.\left(\left(d_x^j\right)^2 + \left(d_y^j\right)^2\right) - \left(c_x^j.d_y^j - c_y^j.d_y^j\right)^2$. Cette forme particulière de réalisation a notamment pour avantage qu'elle permet de ne trouver que les seuls chemins physiquement réalisables, la fonction de coût $t^{j,j+1}$ prenant en compte la vitesse effective de déplacement du mobile par rapport à l'espace. Selon cette forme particulière de réalisation, la détermination de la séquence de points de passage permettant au mobile de relier le point de départ au point d'arrivée en un minimum de temps comprend la détermination de coûts $T_i$ pour des points de passage $V_i$, ces coûts $T_i$ étant définis par la relation :

$$T_i = \min_{d_x^j, d_y^j} \sum_{j=0}^{i-1} t^{j,j+1}.$$

Les coûts $T_i$ peuvent être déterminés en utilisant une méthode du gradient projeté paramétrée par un paramètre de tolérance ε.

L'invention sera mieux comprise et d'autres avantages apparaîtront à la lecture de la description détaillée d'un mode de réalisation donné à titre d'exemple, description faite en regard de dessins annexés qui représentent :

- la figure 1a, un premier exemple de discrétisation d'un espace donné ;
- la figure 1b, un deuxième exemple de discrétisation de l'espace ;
- la figure 2, deux zones de courant élémentaire comprenant des bords et des points de passage ;
- la figure 3, l'ensemble des directions de propagation effectivement accessibles à partir d'un point de passage ;
- la figure 4, différentes étapes de l'algorithme de propagation d'onde selon l'invention.

Le procédé de planification de chemins selon l'invention comprend plusieurs étapes.

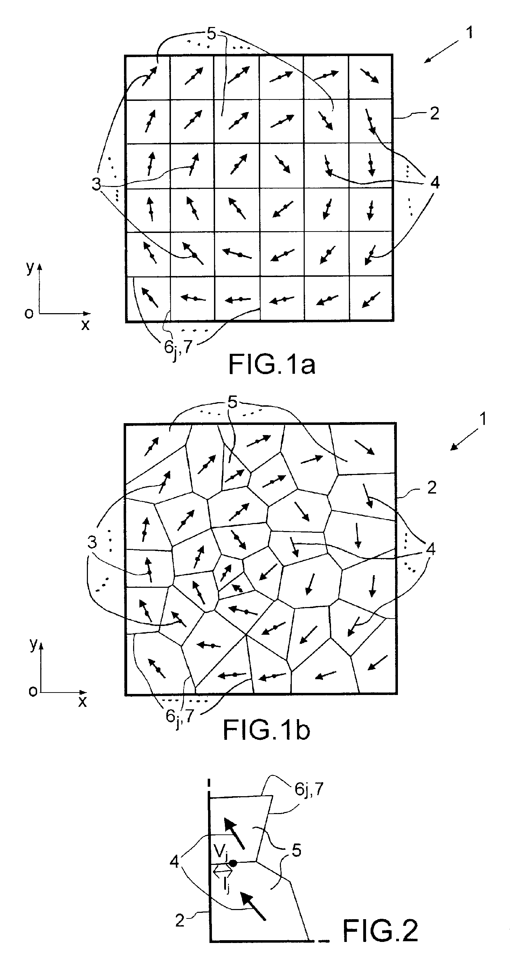

Les figures 1a et 1b représentent deux exemples différents résultant de la première étape du procédé. Pour la suite de la description, on considère un espace plan de dimensions finies. Cependant, le procédé selon l'invention peut être étendu à un espace à trois dimensions moyennant des adaptations exposées plus loin. Dans ces deux exemples, on considère un espace 1 carré délimité par une frontière 2 à l'intérieur de laquelle un mobile peut se déplacer. Le procédé selon l'invention s'applique néanmoins tout aussi bien à un espace polygonal. Dans tous les cas, un repère cartésien $R(O, x, y)$, par exemple orthogonal, est associé au plan de l'espace 1. La répartition des courants dans cet espace 1 est connue. Pour différents points 3 de l'espace 1, on connait des données relatives aux courants, notamment une vitesse et une orientation du courant. Sur les figures 1a et 1b, la vitesse et l'orientation du courant en chaque point 3 sont représentées par un vecteur 4 de courant centré sur le point 3 considéré. La vitesse et l'orientation du courant en chaque point 3 peuvent être déterminées par prévision ou par mesure. La distribution des points 3 dans l'espace 1 peut être régulière, comme représenté à la figure 1a ou irrégulière, comme représenté à la figure 1 b. Dans la première étape du procédé, l'espace 1 est discrétisé en zones 5 de courant élémentaire. Chaque zone 5 de courant élémentaire est délimitée par des bords $6_j$. L'indice j varie de 1 à N, N étant le nombre de bords $6_j$ des zones 5 de courant élémentaire, et permet de repérer et différencier les différents bords $6_j$. Avantageusement, la discrétisation est fonction de la distribution des points 3, une zone 5 de courant élémentaire de forme polygonale étant définie pour chaque point 3. Dans chaque zone 5 de courant élémentaire, la vitesse et l'orientation du courant est supposée uniforme. Dans une forme particulière de réalisation, les zones 5 de courant élémentaire sont déterminées en calculant le diagramme de Voronoï autour des points 3. Le diagramme de Voronoï comprend un ensemble de segments de droites 7, chaque droite étant équidistante de deux points 3. Dans le cas général, c'est-à-dire dans le cas d'une distribution irrégulière des points 3, les segments de droite 7 forment des zones 5 de courant élémentaire de forme polygonale. Dans le cas particulier d'une distribution régulière des points 3, les zones 5 de courant élémentaire sont des carrés égaux. La longueur de côté des carrés correspond à la distance séparant deux points 3 consécutifs. Chaque carré est centré sur un point 3.

La figure 2 illustre la deuxième étape du procédé selon l'invention. Selon cette étape, un point de passage $V_j$ est associé à chaque bord $6_j$ des zones 5 de courant élémentaire. Selon la forme particulière de réalisation dans laquelle les zones 5 de courant élémentaire sont déterminées en calculant le diagramme de Voronoï, les bords $6_j$ des zones 5 de courant élémentaire correspondent aux segments de droite 7 de ce diagramme. Avantageusement, les bords $6_j$ des zones 5 de courant élémentaire correspondant à une frontière 2 ne comportent pas de point de passage $V_j$. La position du point de passage $V_j$ sur un bord $6_j$ est repérée par une abscisse curviligne $I_j$. Un chemin peut être déterminé par une séquence de Q points de passage $V_j$ entre un point de départ $V_0$ et un point d'arrivée $V_{Q-1}$. En d'autres termes, un chemin peut être déterminé par une séquence de bords $6_j$ et d'abscisses curvilignes $I_j$ associées à chaque point de passage $V_j$.

Les bords $6_j$ peuvent être modélisées de la manière suivante :

- pour chaque bord $6_j$, on détermine une équation de droite du type $a_j.x + b_j.y + c_j = 0$, deux bornes $B_j^- = \left( x_j^- ; y_j^- \right)$ et $B_j^+ = \left( x_j^+ ; y_j^+ \right)$ correspondant aux points d'intersection des segments de droite 7 et un domaine $D_j = \left[ 0 ; l_j^+ \right]$ pour les valeurs possibles de $I_j$, entre les bornes $B_j^-$ et $B_j^+$.

- pour chaque point de passage $V_j$, on peut repérer ses coordonnées $V_j = (x_j ; y_j)$ dans le repère cartésien $R(O,x,y)$ par les relations :

$$\begin{cases} x_j = x_j^- + \sqrt{l_j^2 / \left(1 + \left(a_j / b_j\right)^2\right)} \\ y_j = y_j^- + \left(- a_j . x_j - c_j\right) / b_j \end{cases} \qquad (1)$$

Par ailleurs, pour chaque bord $6_j$, on note $A_j = \{ECA_k ; ECA_l\}$ la liste des zones 5 de courant élémentaire adjacentes au bord $6_j$, où $ECA_k$ et $ECA_l$ sont des zones 5 de courant élémentaire, les indices k et l pouvant varier de 1 à M, M étant le nombre de zones 5 de courant élémentaire.

La notion de voisinage entre deux points de passage peut être définie ainsi : deux points de passage $V_i$ et $V_j$ sont voisins si et seulement si $A_i \cap A_j \neq \{ \}$, où $\{ \}$ désigne l'ensemble vide.

Dans une troisième étape, on détermine une séquence de points de passage $V_j$ permettant au mobile de relier le point de départ au point d'arrivée en un minimum de temps. En d'autres termes, on détermine simultanément une séquence de bords $6_j$ et les abscisses curvilignes $l_j$ associées à chaque point de passage $V_j$.

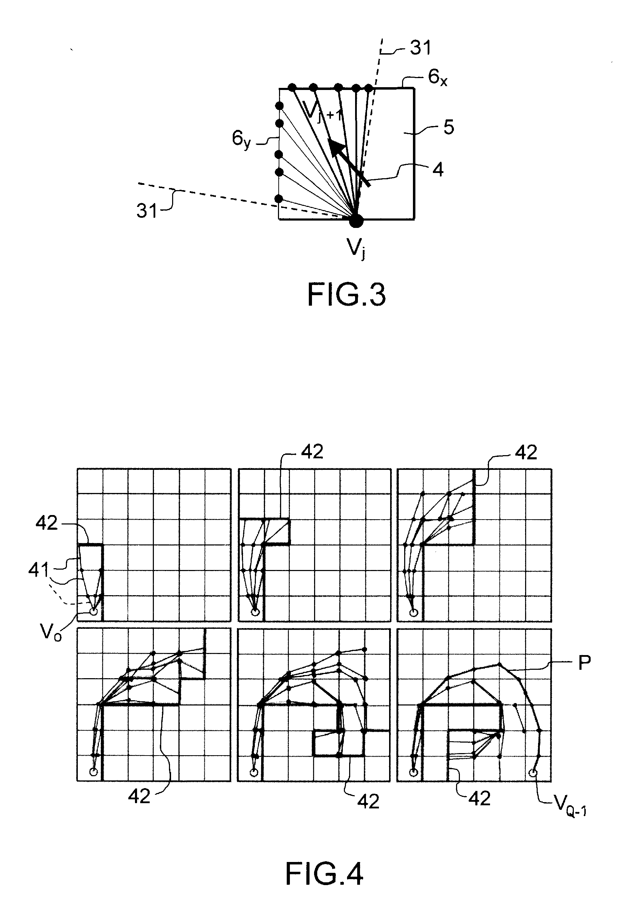

Selon une forme particulière de réalisation, cette troisième étape utilise un algorithme de propagation d'onde, cet algorithme étant adapté aux points de passage $V_j$ selon l'invention. Un point de passage associé à une cellule d'un algorithme de propagation d'onde classique est défini à l'avance, au moment du processus de discrétisation. Généralement, ce point de passage est fixé au centre de la cellule ou au milieu de l'un de ses côtés. Cet aspect statique est à l'origine des problèmes d'incomplétude évoqués précédemment. Si un point de passage est situé dans une zone non atteignable, par exemple à cause d'un courant opposé au déplacement du mobile, l'ensemble de la cellule est considéré comme inaccessible même si certaines régions de la cellule sont en réalité accessibles. Un point de passage $V_j$ selon l'invention introduit un degré de liberté supplémentaire, permettant de rendre accessible l'ensemble des directions de propagation effectivement accessibles à l'intérieur d'une zone 5 de courant, comme représenté à la figure 3. Sur cette figure, on considère un point de passage $V_j$ situé sur un bord $6_i$. L'ensemble des directions de propagation effectivement accessibles à partir du point de passage $V_j$ est représenté par une zone située entre deux droites 31. Par conséquent, l'ensemble des points de passage $V_{j+1}$ possibles suivants sont situés sur les bords $6_x$ et $6_y$ appartenant à cette zone, les indices x et y appartenant à l'ensemble de nombres entiers compris entre 1 et N. Selon l'invention, si un chemin physiquement réalisable existe, il peut être calculé avec une précision arbitraire, cette précision étant directement liée à la finesse d'évaluation des points de passage $V_j$.

L'algorithme de propagation d'onde est adapté aux points de passage $V_j$ selon l'invention, par exemple de la façon décrite ci-après. Cette adaptation est nécessaire dans la mesure où les points de passage $V_j$ possèdent un degré de liberté. Ce degré de liberté doit être fixé pour chaque point de passage $V_j$ sur le chemin d'un point de passage $V_i$ avant de pouvoir déterminer le point de passage $V_i^{min}$ de coût minimal. Le bord associé à ce point de passage $V_i^{min}$ est noté $6_j^{min}$. Lors d'une première étape, tous les points de passage $V_i$ associés aux bords $6_i$ de la zone 5 de courant élémentaire contenant le point de départ sont évalués en termes de coût. Contrairement à un algorithme de propagation d'onde classique, l'évaluation du coût d'un point de passage $V_i$ comprend la détermination de sa position sur son bord $6_i$ permettant de minimiser le coût. Lors d'une deuxième étape, on considère le point de passage $V_i^{min}$ pour lequel le coût est minimal et on évalue le coût entre le point de départ et les points de passage $V_i$ associés aux bords $6_i$ de la zone 5 de courant élémentaire adjacente au bord $6_j^{min}$. De même, l'évaluation d'un coût pour un point de passage $V_i$ comprend la détermination de la position de ce point de passage $V_i$ ainsi que de tous les points de passage $V_j$ sur le chemin entre le point de départ et le point de passage $V_i$, ces positions minimisant le coût du point de passage $V_i$. Le même processus est répété jusqu'à ce que le chemin atteigne un bord $6_i$ de la zone 5 de courant élémentaire contenant le point d'arrivée : on considère le point de passage $V_i^{min}$ pour lequel le coût est minimal et on évalue le coût entre le point de départ et les points de passage $V_i$ associés aux bords $6_i$ de la zone 5 de courant élémentaire adjacente au bord $6_i^{min}$. Dans le cas où plusieurs points de passage ont un coût égal, on considère successivement ces points de passage. La séquence de points de passage $V_i^{min}$ est enregistrée au fur et à mesure de la propagation de l'algorithme afin d'obtenir le chemin optimal entre le point de départ et le point d'arrivée.

La suite de la description est consacrée à la détermination des points de passage $V_j$ par un algorithme de propagation d'onde adapté. On considère les notations suivantes :

- $\overline{d}(d_x ; d_y)$ représente un déplacement du mobile dans le repère $R(O,x,y)$,
- $\overline{c}(c_x ; c_y)$ représente le vecteur vitesse du courant dans une zone 5 de courant élémentaire,
- $\overline{v}(v_x ; v_y)$ représente le vecteur vitesse du mobile par rapport au courant.

Etant donné que les zones 5 de courant élémentaire sont une décomposition exacte de l'espace en cellules, un chemin $P$ entre le point de départ et le point d'arrivée passe nécessairement par une suite de zones 5 de courant élémentaire adjacentes. Par ailleurs, le courant étant uniforme dans chaque zone 5 de courant élémentaire, le mobile doit se déplacer en ligne droite entre deux points de passage V$_j$ pour minimiser le temps de parcours. Par conséquent, un chemin $P$ peut être défini comme une succession de segments de droite entre le point de départ et le point d'arrivée. On associe une fonction de coût $t^{j,j+1}$ à chaque segment de droite entre deux points de passage V$_j$ et V$_{j+1}$ voisins. Cette fonction de coût $t^{j,j+1}$ correspond au temps de parcours effectif du mobile entre les points de passage V$_j$ et V$_{j+1}$. De manière générale, le temps de parcours $t$ pour effectuer un mouvement $\overline{d}$ par un mobile se déplaçant à la vitesse $\overline{v}$ dans un courant $\overline{c}$ vérifie la relation : $\vec{d} = (\vec{v} + \vec{c}).t$ . Projetée sur les axes $x$ et $y$, cette relation devient :

$$\begin{cases} d_x = (v_x + c_x).t \\ d_y = (v_y + c_y).t \end{cases} \quad (2)$$

La relation $v^2 = v_x^2 + v_y^2$ permet d'éliminer $v_x$ et $v_y$ des équations précédentes et d'aboutir à la relation :

$$(d_x - c_x.t)^2 + (d_y - c_y.t)^2 = v^2.t^2 \quad (3)$$

La résolution de cette équation du second degré donne les solutions :

$$t = \frac{-(c_x.d_x + c_y.d_y) \pm \sqrt{\Delta}}{v^2 - c^2}, \quad (4)$$

où

$$\Delta = v^2.(d_x^2 + d_y^2) - (c_x.d_y - c_y.d_x)^2.$$

Le temps de parcours étant forcément positif, la solution est donnée par la relation :

$$t = \frac{-(c_x.d_x + c_y.d_y) + \sqrt{\Delta}}{v^2 - c^2}. \quad (5)$$

Par conséquent, la fonction de coût $t^{j,j+1}$ entre les points de passage V$_j$ et V$_{j+1}$ peut être définie par la relation :

$$t^{j,j+1} = \frac{-(c_x^j.d_x^j + c_y^j.d_y^j) + \sqrt{\Delta}}{(v^j)^2 - (c^j)^2}, \quad (6)$$

où $\overrightarrow{d^j}(d_x^j; d_y^j)$ représente le déplacement du mobile entre les points de passage V$_j$ et V$_{j+1}$ $(d_x^j = x_{j+1} - x_j;\ d_y^j = y_{j+1} - y_j)$, $\overrightarrow{c^j}(c_x^j; c_y^j)$ représente le vecteur vitesse du courant dans la zone 5 de courant élémentaire dans laquelle se déplace le mobile, $\overrightarrow{v^j}(v_x^j; v_y^j)$ représente le vecteur vitesse du mobile par rapport au vecteur vitesse $\vec{c^j}$ du courant dans cette même zone 5 de courant élémentaire et où

$$\Delta = \left(v^j\right)^2.\left(\left(d_x^j\right)^2 + \left(d_y^j\right)^2\right) - \left(c_x^j.d_y^j - c_y^j.d_y^j\right)^2.$$

Le temps de parcours optimal pour un chemin entre un point de passage $V_0$, par exemple le point de départ, et un point de passage $V_i$, par exemple le point d'arrivée, peut être déterminé par un coût $T_i$ défini par la relation :

$$T_i = \min_{d_x^j, d_y^j} \sum_{j=0}^{i-1} t^{j,j+1} . \qquad (7)$$

Cette relation signifie que le chemin entre $V_0$ et $V_i$ est déterminé en minimisant de façon globale les fonctions de coût $t^{j,j+1}$ du coût $T_i$, la position des points de passage $V_j$ sur les bords $6_j$ étant déterminée afin de minimiser le temps de parcours entre $V_0$ et $V_i$. Dans une forme particulière de réalisation, les variables $x_j$ et $y_j$ pour chaque point de passage $V_j$ sont substituées par une variable unique, l'abscisse curviligne $l_j$. Cette forme de réalisation permet de ne faire dépendre le coût $T_i$ que des abscisses curvilignes $l_j$ et donc de diviser par deux le nombre de variables du coût $T_i$. Le coût $T_i$ peut être déterminé par toute technique d'optimisation numérique, plus précisément par tout algorithme d'optimisation sous contraintes, avec $d_x^j$ et $d_y^j$, ou le cas échéant l'abscisse curviligne $l_j$, comme variables d'optimisation. Un exemple d'algorithme d'optimisation sous contrainte est la méthode du gradient projeté. Cette méthode est brièvement présentée en annexe. Pour une description plus complète, on pourra notamment se référer à Rosen, J. B., The gradient Projection Method for Nonlinear Programming : Part I - Linear Constraints, J. Soc. Indus. Appl. Math., vol 8, pp 181-217, 1960. La méthode du gradient projeté est similaire à une descente du gradient, mais permet en plus de gérer des contraintes de bornes sur les variables. En l'occurrence, les abscisses curvilignes $l_j$ sont limitées à leur domaine $D_j = \left[0; l_j^+\right]$. La technique du gradient projeté converge généralement vers la solution optimale, toutefois sans l'atteindre. Pour stopper cette convergence, il est possible d'appliquer un paramètre de tolérance $\varepsilon$ sur l'annulation du gradient de $T_i$. Ce paramètre de tolérance $\varepsilon$ est prédéterminé ; il peut être choisi par un utilisateur. Il a un impact direct sur la qualité du chemin planifié. Plus ce paramètre de tolérance $\varepsilon$ est proche de zéro, plus le temps de parcours du chemin planifié se rapproche de l'optimal. L'utilisation du paramètre de tolérance $\varepsilon$ peut être mathématisée par la relation suivante :

$$\left|\overrightarrow{grad}\left(T_i\right)\right| < \varepsilon \qquad (8)$$

Il est à noter que l'optimisation du coût $T_i$ peut également être réalisée par d'autres techniques, telles que la méthode quasi-Newton, la programmation quadratique, la méthode des Lagrangiens augmentés, aussi appelée méthode des pénalités, les méthodes de gradient réduit, ou encore les méthodes de point intérieur, également appelées méthodes de barrière.

Il est important de souligner que l'évaluation d'un point de passage $V_i$ peut potentiellement modifier la position de tous ses prédécesseurs $V_j$, l'ensemble des points de passage $V_j$ étant remis en question pour minimiser le coût global $T_i$.

La troisième étape du procédé selon l'invention est illustrée par la figure 4. Sur cette figure, un espace 1 est représenté à différentes étapes, non successives, de l'algorithme de propagation d'onde selon l'invention. Les différentes étapes sont présentées chronologiquement de gauche à droite et de haut en bas. La répartition du courant dans l'espace 1 est identique à celle de la figure 1a avec une vitesse de courant $c = 150$ km/h. La vitesse du mobile est fixée à $v = 100$ km/h. Les segments de droite 41 reliant les différents points de passage $V_j$ représentent différents chemins $P$ possibles entre le point de départ $V_0$ et un point de passage $V_i$. A chaque étape de l'algorithme de propagation d'onde, un front d'onde 42 se propage avec l'algorithme de propagation d'onde selon l'invention. Ce front d'onde 42 délimite les zones 5 de courant élémentaire dont au moins un bord $6_j$ a été exploré des autres zones 5 de courant élémentaire. Comme représenté à la figure 4, la position des points de passage $V_j$ sur leur bord $6_j$, de même que la séquence de points de passage $V_j$, autrement dit le chemin, peut évoluer au cours de la détermination du coût $T_i$. L'évolution de la séquence de points de passage $V_j$ et de leur position illustre la recherche d'un minimum global pour le coût $T_i$. La dernière étape représentée à la figure 4 correspond à l'étape où un chemin $P$ est trouvé entre le point de départ $V_0$ et le point d'arrivée $V_{Q-1}$.

Le procédé selon l'invention ne s'applique pas seulement à un espace 1 bidimensionnel ; il s'applique également à un espace tridimensionnel. Dans un espace tridimensionnel, les zones 5 de courant élémentaire sont remplacées par des polyèdres. Chaque face du polyèdre correspond à un bord $6_j$ tel qu'il est défini dans un espace à deux dimensions. Un point de passage est alors repéré sur une face de polyèdre par deux coordonnées.

ANNEXE

La présente annexe a pour but de présenter brièvement la méthode du gradient projeté. Pour une description plus complète de cette méthode, on pourra notamment se référer à Rosen, J. B., The gradient Projection Method for Nonlinear Programming : Part I - Linear Constraints, J. Soc. Indus. Appl. Math., vol 8, pp 181-217, 1960.

L'algorithme du gradient projeté est une variante de la descente du gradient en cas d'optimisation d'une fonction f sous contraintes. Un opérateur de projection est ajouté dans le processus de descente afin de rester dans le domaine valide.

Si $\Omega$ désigne le sous-ensemble de l'espace des solutions où les contraintes sont vérifiées, alors à chaque pas de la descente du gradient, on projette sur $\Omega$ le point obtenu dans la direction de la plus forte pente, soit dans une direction colinéaire au gradient de *f*.

Le processus de projection peut être mathématisé comme suit. Dans le cas de la descente du gradient, si à l'itération k du processus de minimisation, on se situe au point $x_k$ de l'espace des solutions, alors le prochain point $x_{k+1}$ est calculé par la relation :

$$x_{k+1} = x_k - \alpha \nabla f(x_k),$$

où $\alpha$ est un paramètre et V l'opérateur gradient.

Dans le cas du gradient projeté, le point $x_{k+1}$ est calculé par :

$$x_{k+1} = P_\Omega(x_k - \alpha \nabla f(x_k)),$$

où $P_\Omega(x)$ désigne la projection de x sur l'ensemble $\Omega$.

**Revendications**

1. Procédé de planification de chemins (P) pour un mobile entre un point de départ ($V_0$) et un point d'arrivé ($V_{Q-1}$) situés dans un espace (1) donné en présence de courants, ces courants pouvant varier en vitesse et en direction dans l'espace (1), le mobile étant soumis aux courants et se déplaçant à une vitesse (v) donnée par rapport aux courants, le procédé étant **caractérisé en ce qu'**il comprend les étapes suivantes :

   - discrétiser l'espace (1) en zones (5) de courant élémentaire, chaque zone (5) étant délimitée par des bords ($6_j$),
   - associer à chaque bord ($6_j$) un point de passage ($V_j$) possible pour le mobile, chaque point de passage ($V_j$) pouvant translater sur son bord ($6_j$),
   - déterminer une séquence de points de passage ($V_j$) permettant au mobile de relier le point de départ ($V_0$) au point d'arrivée ($V_{Q-1}$) en un minimum de temps.

2. Procédé de planification de chemins selon la revendication 1, **caractérisé en ce qu'**une zone (5) de courant élémentaire est une zone de forme polygonale, indivisible et dans laquelle le courant est considéré comme homogène sur la totalité de la surface de la zone.

3. Procédé de planification de chemins selon la revendication 2, **caractérisé en ce que** les zones (5) de courant élémentaire sont construites en calculant le diagramme de Voronoï autour de points (3) pour lesquels on connait une vitesse et une direction de courant.

4. Procédé de planification de chemins selon l'une quelconque des revendications précédentes, **caractérisé en ce que** la détermination de la séquence de points de passage ($V_j$) permettant au mobile de relier le point de départ ($V_0$) au point d'arrivée ($V_{Q-1}$) en un minimum de temps utilise un algorithme de propagation d'onde adapté aux points de passage ($V_j$).

5. Procédé de planification de chemins selon l'une quelconque des revendications précédentes, **caractérisé en ce qu'**un chemin (P) comprend une succession de segments de droite (41) entre le point de départ ($V_0$) et le point d'arrivée ($V_{Q-1}$), une fonction de coût $t^{j,j+1}$ étant associée à chaque segment de droite (41) entre deux points de passage $V_j$ et $V_{j+1}$ voisins et définie par la relation :

$$t^{j,j+1} = \frac{-\left(c_x^j.d_x^j + c_y^j.d_y^j\right) + \sqrt{\Delta}}{\left(v^j\right)^2 - \left(c^j\right)^2}, \quad \text{où} \quad \overrightarrow{d^j}\left(d_x^j; d_y^j\right)$$

représente le déplacement du mobile entre les points de passage voisins $V_j$ et $V_{j+1}$, $\overrightarrow{c^j}\left(c_x^j; c_y^j\right)$ représente le vecteur vitesse du courant dans la zone (5) de courant élémentaire dans laquelle se déplace le mobile, $\overrightarrow{v^j}\left(v_x^j; v_y^j\right)$ représente le vecteur vitesse du mobile par rapport au courant dans cette même zone (5) de courant élémentaire

et où $\Delta = \left(v^j\right)^2.\left(\left(d_x^j\right)^2 + \left(d_y^j\right)^2\right) - \left(c_x^j.d_y^j - c_y^j.d_y^j\right)^2$.

6. Procédé de planification de chemins selon la revendication 5, **caractérisé en ce que** la détermination de la séquence de points de passage ($V_j$) permettant au mobile de relier le point de départ ($V_0$) au point d'arrivée ($V_{Q-1}$) en un minimum de temps comprend la détermination de coûts $T_i$ pour des points de passage $V_i$, ces coûts $T_i$ étant définis par la relation :

$$T_i = \min_{d_x^j, d_y^j} \sum_{j=0}^{i-1} t^{j,j+1}.$$

7. Procédé de planification de chemins selon la revendication 6, **caractérisé en ce que** les coûts $T_i$ sont déterminés en utilisant une méthode du gradient projeté paramétrée par un paramètre de tolérance $\varepsilon$.

FIG.1a

FIG.1b

FIG.2

FIG.3

FIG.4

Europäisches
Patentamt

European
Patent Office

Office européen
des brevets

**RAPPORT DE RECHERCHE EUROPEENNE**

Numéro de la demande

EP 09 15 7000

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SOULIGNAC, MICHAEL; TAILLIBERT, PATRICK: "Fast Trajectory Plannig for Multiple Site Surveillance through Moving Obstacles and Wind" THE 25TH WORKSHOP OF THE UK PLANNING AND SCHEDULING SPECIAL INTEREST GROUP, [Online] 14 décembre 2006 (2006-12-14), XP002511125 Nottingham, NG1 5RH England Extrait de l'Internet: URL:http://www.cs.nott.ac.uk/~rxq/PlanSIG/ soulignac_taillibert.pdf> [extrait le 2009-01-19] * page 4, colonnes 1,2 * * page 3, colonne 1 * * page 1, colonne 2 * ----- | 1-7 | INV. B64C39/02 G05D1/00 |
| X,D | PETRES C ET AL: "Underwater path planing using fast marching algorithms" OCEANS 2005 - EUROPE BREST, FRANCE 20-23 JUNE 2005, PISCATAWAY, NJ, USA,IEEE, US, vol. 2, 20 juin 2005 (2005-06-20), pages 814-819Vol.2, XP010838256 ISBN: 978-0-7803-9103-1 * page 815, colonne 1, alinéa 6 * * page 816, colonne 1, alinéa 1 - alinéa 2 * ----- -/-- | 1-7 | DOMAINES TECHNIQUES RECHERCHES (IPC) B64C G05D G01C |

Le présent rapport a été établi pour toutes les revendications

| Lieu de la recherche | Date d'achèvement de la recherche | Examinateur |
|---|---|---|
| La Haye | 28 mai 2009 | Polednicek, Milos |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

## RAPPORT DE RECHERCHE EUROPEENNE

Numéro de la demande

EP 09 15 7000

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | GARAU, BARTOLOME; ALVAREZ ALBERTO; OLIVIER, GABRIEL: "Path Planning of Autonomous Underwater Vehicles in Current Fields with Complex Spatial variability: an A* Approach" PROCEEDINGS OF THE 2005 IEEE INTERNATIONAL CONFERENCE ON ROBOTICS AND AUTOMATION, 18 avril 2005 (2005-04-18), - 22 avril 2005 (2005-04-22) pages 194-198, XP002511126 Barcelona, Spain ISBN: 0-7803-8914-X * page 196, colonne 1, alinéa 2 - alinéa 4 * * page 195, colonne 2, alinéa 4 - alinéa 5 * ----- | 1-7 | |
| A | DORST L ET AL: "OPTIMAL PATH PLANNING BY COST WAVE PROPAGATION IN METRIC CONFIGURATION SPACE" PROCEEDINGS OF THE SPIE, SPIE, BELLINGHAM, VA; US, vol. 1007, 10 novembre 1988 (1988-11-10), pages 186-197, XP000748370 * page 191, alinéa 5.3 * * page 187, alinéa 3.3 * ----- | 1-7 | DOMAINES TECHNIQUES RECHERCHES (IPC) |
| A | EP 1 835 370 A (THALES SA [FR]) 19 septembre 2007 (2007-09-19) * page 2, ligne 25 - ligne 30 * * page 5, ligne 16 - ligne 36 * * page 8, ligne 33 - ligne 50 * ----- | 1-7 | |

Le présent rapport a été établi pour toutes les revendications

| Lieu de la recherche | Date d'achèvement de la recherche | Examinateur |
|---|---|---|
| La Haye | 28 mai 2009 | Polednicek, Milos |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

........................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 15 7000

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-05-2009

| Document brevet cité au rapport de recherche | Date de publication | Membre(s) de la famille de brevet(s) | Date de publication |
|---|---|---|---|
| EP 1835370 A | 19-09-2007 | FR 2898699 A1 | 21-09-2007 |

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JARVIS, R.** Collision-Free Trajectory Planning Using Distance Transforms, Mechanical Engineering Transactions. *Journal of Institution of Engineers,* 1985, vol. ME10 (3), 187-191
- **PETRES, C. ; Y. PAILHAS ; J. EVANS ; Y. PETILLOT ; D. LANE.** Underwater path planning using fast marching algorithms. *Proceedings of Oceans 2005 - Europe,* Juin 2005, vol. 2, 814-819
- **GARAU, B. ; A. ALVAREZ ; G. OLIVER.** Path planning of autonomous underwater vehicles in current fields with complex spatial variability: an A* approach. *Proceedings of the IEEE Conference on Robotics and Automation (ICRA 2005),* Avril 2005, 546-556
- **SOULIGNAC, M.** Planification de trajectoires pour engins volants autonomes. *Rencontre Nationale des Jeunes Chercheurs en Intelligence Artificielle,* 195-212
- **Rosen, J. B.** The gradient Projection Method for Nonlinear Programming : Part I - Linear Constraints. *J. Soc. Indus. Appl. Math.,* 1960, vol. 8, 181-217